Europäisches Patentamt

(19) European Patent Office

Office européen des brevets

(11) Publication number: **0 000 238**

B1

# EUROPEAN PATENT SPECIFICATION

(12)

(45) Date of publication of patent specification: **24.02.82**

(21) Application number: **78300003.7**

(22) Date of filing: **01.06.78**

(51) Int. Cl.³: **C 10 L 1/00, C 10 G 9/00; B 01 J 8/24**

(54) **A method of converting a sulphur-containing fuel to a substantially sulphur-free combustible gas.**

(30) Priority: **03.06.77 GB 2363977**

(43) Date of publication of application:
**10.01.79 Bulletin 79/1**

(45) Publication of the grant of the patent:
**24.02.82 Bulletin 82/8**

(84) Designated Contracting States:
**BE DE FR GB NL SE**

(56) References cited:
**US - A - 3 969 089**

(73) Proprietor: **Exxon Research and Engineering Company**
**P.O.Box 390 200 Park Avenue**
**Florham Park New Jersey 07932 (US)**

(72) Inventor: **Johnes, Graham Lloyd**
**"Applecross", Mill Paddock Letcombe Regis**
**Wantage, Oxfordshire (GB)**

(74) Representative: **Somers, Harold Arnold et al,**
**5 Hanover Square**
**London W1R OHQ (GB)**

Courier Press, Leamington Spa, England.

# A method of converting a sulphur-containing fuel to a substantially sulphur-free combustible gas.

The present invention relates to the conversion of sulphur-containing fuel into a substantially sulphur-free combustible gas and was made in the course of work performed under a contract with the United States Environmental Protection Agency.

It is known that sulphur-containing fuels such as hydrocarbonaceous solids (e.g. coal), hydrocarbon liquids ranging from semi-liquids such as tar or tar-containing materials to fuel oils and lighter hydrocarbon substances and hydrocarbon gases and even substances such as sulphur-containing gases, either singly or in any feasible combination, can be converted to substantially sulphur-free gas by at least partial combustion within a bed of particles containing calcium oxide fluidized by an upwardly-passing free oxygen-containing gas at suitable elevated fuel conversion temperatures. See, for example, U.K. patent Specification No. 1336563.

If the proportion of free oxygen relative to fuel is high, in stoichiometric terms, the fuel is converted to a substantially sulphur-free fine gas with the evolution of the heat of combustion of the fuel. If the proportion of free oxygen relative to the fuel is less than stoichiometric, the fuel is partially combusted or "gasified" and the resulting substantially sulphur-free gases are combustible. The amount of heat liberated depends on the relative proportions of oxygen and fuel and in the case of heavier fuels such as heavy fuel oil, for example, the amount of heat liberated is just sufficient to maintain the bed at fuel conversion temperatures with good sulphur retention in the bed particles when the oxygen is about 20% of the stoichiometric proportion.

The conversion of sulphur-containing fuel as described above is performed in a dense phase fluidized bed of the calcium oxide-containing particles, and as is common in fluidized bed operations, a certain amount of fine particles ("fines") tends to be elutriated out of the bed with the converted gases. Since the gases are employed in downstream equipment such as burners, heat recovery devices and similar equipment either singly or in combination, and such equipment tends to be reduced in efficiency and/or may be damaged by the passage thereinto and therethrough of such fines, steps have been taken to reduce the quantity of fines elutriated from the dense phase bed and also to reduce to an acceptable level the passage of such elutriated fines passing to the downstream equipment and to avoid venting gas containing fines to the atmosphere. Thus, the quantity of fines produced by the bed may be reduced by a proper selection of the material of the bed particles, by (inter alia) regulating the superficial velocity of the fluidizing gases through and above the bed below certain velocities, and the passage of elutriated and entrained particles to downstream equipment is reduced by circulating the substantially sulphur-free gas through particle-arresting devices such as cyclones or other apparatus having particle-retaining functions.

If the amount of sulphur associated with fuel entering the fluidized bed increases, e.g. due to an increase in the amount of fuel supplied to the bed to provide an increased amount of substantially sulphur-free gas and/or due to an increase in the sulphur content of the fuel, the amount of sulphur in the combustible gas leaving the bed tends to increase. Such an increase may be sufficiently small to be acceptable in the gas, but if it is not acceptable, steps must be taken to reduce the sulphur content of the gas produced in the bed. A number of expedients may be adopted to reduce the sulphur content of the gas to a level not exceeding the acceptable upper limit. For example, the amount of calcium oxide in the bed may be increased by adding particles containing calcium oxide or precursors thereof such as limestone and/or dolomite to the bed. However, there are limits to the amount of bed material which can be accommodated in the conversion bed. The limits are set by such factors as the volumetric capacity of the vessel containing the conversion bed and the pressure drop through the bed which may attain an unacceptably high value. When ordinary expedients to reduce the sulphur content of the gas leaving the conversion bed have been exploited to the limits imposed by economic physical and operational factors, it has been the practice in the past either to accept a gas of lower quality (i.e. having a sulphur content above the normal acceptable limit) or to reduce the amount of sulphur supplied to the conversion bed either (a) by changing to a fuel of lower sulphur content or (b) by reducing the fuel input. In many circumstances, neither of these expedients is convenient since expedient (a) requires the provision of a relatively low sulphur fuel in addition to the fuel undergoing conversion, and apart from the additional storage space required, the quality of the gas product may differ appreciably from the desired gas product. Expedient (b) may necessitate reducing the operating capacity of equipment using the gas product.

It has now been discovered, and this forms the basis of the invention, that the amount of fines in the combustible gas obtained from the conversion bed influences the amount of sulphur in the combustible gas.

According to the invention, there is provided a method of converting a sulfur-containing fuel to a low sulfur-containing combustible gas by the steps of: partially combusting the sulfur-containing fuel within a dense phase fluidized conversion bed of particulate solids of which at least some solids comprise alkaline earth metal oxide whereby to produce a combustible gas of low sulfur content which leaves the top surface of the bed and entrains fine solids from the bed, the bed being contained in partial combustion equipment whereof the operating conditions include at least one condition which is limiting with respect to reducing the amount of sulfur in the combustible gas; causing the combustible gas to pass through a solids separation device whereby at least some of the entrained fine solids are separated from the combustible gas, and a combustible gas of low sulfur content and reduced solids content is discharged from the separation device; and monitoring the sulfur content of the combustible gas or of gases derived therefrom (e.g. flue gases) to obtain a signal representative of the sulfur content of the combustible gas; and causing a regulated increase in the total amount of solids in the combustible gas passing to the solids separation device in response to an increase in the sulfur content of the combustible gas as indicated by the sulfur-representative signal thereby reducing the amount of sulfur in the combustible gas discharged from the separating device.

A "dense phase fluidized bed" is well-known in the art and is a bed of particulate solids which is fluidized by the upward passage therethrough of a fluid, the upward velocity of the fluid being such that the bed has a relatively distinct top surface.

The fines may comprise substances which are reactive with sulphur in sulphur-containing compounds and/or they may comprise inert substances. The increased amount of fines can be provided in any convenient way — e.g. by the addition or provision of such fines or fines-producing solids in the conversion bed and/or in the dilute phase or freeboard above the bed and/or in a conduit through which the converted gas passes to the downstream equipment.

It is preferred for most downstream equipment e.g. burners, heat recovery devices, inter alia, that the converted gases be substantially freed of the fines upstream of the equipment.

In order to produce a converted gas having an acceptably low sulphur content without employing more fines than is necessary (since this entails a greater load on the fines-retaining solids separation equipment, and also on equipment for disposing of and/or recirculating the thus retained fines), it is desirable to monitor the amount of fines in the converted gases and to regulate the amount accordingly.

The monitoring of the amount of fines may be effected in any convenient manner of which the following are given by way of non limitative examples only:

In one method, converted gas is caused to impinge on a pivoted or hinged member and deflections of the latter from a datum position indicate the fines content of the gas. A signal is generated whose magnitude is representative of the deflection of the member, and the signal is employed to regulate the amount of fines in the gas.

In another method, wherein the fines-containing gas is passed through a fines-retaining device which separates fines from the gas to give a substantially sulphur-free, substantially solids-free gas, the rate of retention or accumulation of solids in the device is monitored and a signal representative of such retention or accumulation rate is employed to regulate the amount of fines in the gas. Thus, the rate of increase in weight of a filter element or device may be monitored, or the rate of fines retention in the dipleg or catchpot of a cyclone. The signal employed to regulate the amount of fines in the gas may be generated directly or inferentially — e.g. by measuring a property of the gas which varies with the amount of solids therein (for instance, an electrical property such as the electrical capacitance of the gas or an acoustic property or a light-transmitting or reflecting property).

In accordance with a preferred embodiment of the invention, the fines-containing converted gases are passed through a fines separation device such as a cyclone, the separated fines are passed to a solids outlet conduit, such as the dipleg of the cyclone, and the temperature of the solids in the outlet conduit is monitored. It has been noted that this temperature bears an adequately close relationship to the amount of fines in the fines-containing converted gas to be used to generate a fines-regulating signal of sufficient accuracy for most operations.

The separated and thus recovered fines may be returned, at least in part, to the fluidized fuel-conversion bed, and/or to the freeboard dilute phase above the bed, in accordance with the requirement for fines to increase sulphur removal from the gases leaving the bed.

In addition and/or alternatively, the amount of fines elutriatable from the bed may be increased by increasing the velocity of gas through the bed, by the addition of fines from another source to the bed, by the attrition of bed particles preferably within the bed, e.g. using high velocity jets of gas (such as air) or by the addition to the bed of a substance which, at the bed conditions, generates fines, Such a material is, e.g., a limestone or like substance which decrepitates. Any combination of the foregoing expedients may be employed, and the fines-regulating signal (however derived) is employed to regulate the amount of fines in the gas leaving the bed.

Instead of, and/or in addition to, increasing the amount of fines elutriated from the bed, fines may be added directly to gas which has already left the bed.

In addition to improving the low sulphur quality of the converted gas, the fines may help to reduce any tendency of deposits to build up on the surfaces of ducts and conduits through which they pass, thereby reducing the flow resistance of gas to downstream equipment.

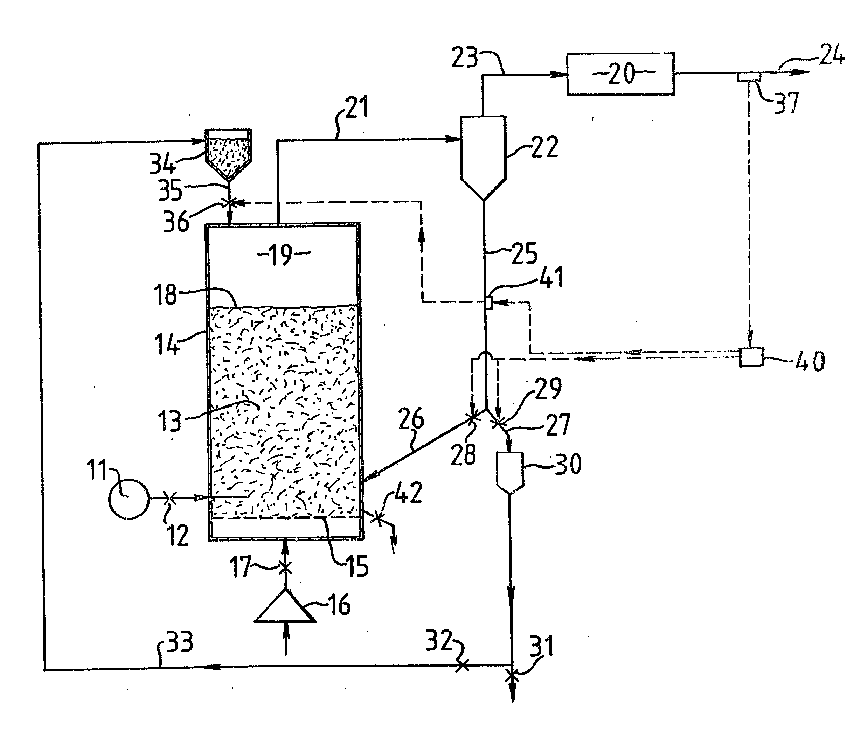

The invention is further described with reference to the accompanying drawing which is a flow diagram of the relevant principal parts of a fuel gasification plant embodying a non-limitative example of the invention.

The sulphur-containing fuel (e.g. high sulphur, heavy fuel oil) is passed from a storage station 11 via a suitable regulating valve 12 into a bed 13 of fluidizable particles comprising calcium oxide contained in a gasifier vessel 14. The bed 13 is supported on a suitable air distributor plate 15, and air is passed into the bed 13 via the plate 15 from a fan 16 at a rate determined by the setting of an air valve 17. The air fluidizes the particles in the bed 13 and converts the fuel into combustible gas of low sulphur content at a temperature in the range 800°C to 1100°C preferably 880 to 920°C (e.g. about 900°C), sulphur being fixed in particles of the bed as calcium sulfide and other non-volatile solid compounds of sulphur.

The combustible gas passes out of the bed 13 via the top surface 18 thereof into the freeboard space 19 in the vessel 14 above the bed 13 and elutriates a certain amount of fine solids from the bed, the amount depending, inter alia, on the nature of the bed particles and the superficial velocity of gas through the bed. The combustible gas and entrained solids is conducted from the vessel 14 to gas utilization equipment 20 such as a burner associated with a heat recovery device (e.g. a boiler) via a conduit 21, a cyclone separator 22 and a conduit 23. The gas after use in equipment 20 is discharged therefrom via conduit 24.

The cyclone separator 22 separates at least some entrained solids from the combustible gas, and the separated solids pass into a dipleg 25 which communicates with a return conduit 26 and a store conduit 27, which conduits have respective solids flow regulating devices 28, 29 to regulate the amounts of solids passing thereinto from the dipleg 25.

The return conduit 26 directs solids into the bed 13 for re-use, and there may be suitable equipment (not shown) of any type known in the art for promoting the passage of solids through conduit 26 into the bed 13.

The store conduit 27 directs solids into a store 30 and the bottom of the latter is connected to a dumping valve 31 (normally closed) and also to a recycle valve 32 (normally open). When desirable or necessary, solids are caused to pass via the recycle valve 32 and a recycle conduit 33 to a solids storage hopper 34 which is constructed and arranged for passing solids into the vessel 14, e.g. into the freeboard space 19 via a conduit 35 and a valve 36.

The sulphur content of the combustible gas produced in bed 13 is measured in any convenient manner. For example, when the combustible gas is burned in equipment 20, it is convenient to monitor the sulphur content of the resulting combustion gas in discharge conduit 24 employing any conventional monitor 37 (e.g. an $SO_2$ meter). The sulphur monitor 37 produces a signal representative of sulphur levels in the combustion gas and the signal is employed to increase the sulphur-retaining action of the bed 13, e.g. by causing the addition of further particles comprising calcium oxide to the bed 13 up to the maximum design level of, or pressure drop through, the bed 13. Other actions may be caused to take place either alternatively or additionally up to limiting values, but the increase in sulphur-retaining bed material is referred to here as one typical but non-limitative action.

When one, some or all actions tending to reduce the level of sulphur as detected by monitor 37 has or have been effected to its or their limiting value(s) and the sulphur level detected by monitor 37 is still above a selected level, steps are initiated to increase the concentration of fine solids in the combustible gas and thereby reduce the amount of sulphur in the gas in accordance with the discovery on which the present invention is based. There are many ways in which the concentration of fine solids in the combustible gas can be increased as will be appreciated by those skilled in the art. For example, when an operating parameter such as the depth of the bed 13 or the superficial gas velocity in vessel 14 attains a limiting value with an excessively high sulphur content in the combustible gas, the valve 36 may be opened to admit fine solids into vessel 14 from hopper 34. Alternatively, or additionally, valve 29 may be closed and valve 28 opened so that solids recovered in the cyclone 22 are returned to the bed 13 via return conduit 26. The foregoing actions may be regulated directly and/or indirectly by the signals produced at monitor 37 from a suitable controller 40.

The addition of fine solids to the bed 13 or freeboard space 19 may not necessarily produce the desired amount of entrained solids in the combustible gas, and suitable equipment for monitoring the entrained solids rate may be incorporated in the installation. We have observed that the temperature of the dipleg 25 or of solids therein bears a strong correlation to the amount of entrained solids. This observation is exploited in the illustrated embodiment wherein a temperature sensor 41 monitors the dipleg temperature and influences the opening and closing of valve 36 either alone or by modulating the signal passing to valve 36 from the controller 40. The signal from temperature sensor 41 may also or alternatively be employed to regulate the opening and closing of valves 28 and 29.

In order to avoid an excessive build-up of particles in the bed 13, a solids dump valve 42 is provided for dumping particles from a zone of bed 13 immediately above the distributor 15.

Excess amounts of fines may be dumped by opening the fines valve 31.

It is to be understood that the described embodiment has not been described exhaustively but only in relation to the invention, and that moreover, the parts shown in the drawing are not represented to a uniform size scale.

## Claims

1. A method of converting a sulfur-containing fuel to a low sulfur-containing combustible gas by the steps of: partially combusting the sulfur-containing fuel within a dense phase fluidized conversion bed of particulate solids of which at least some solids comprise alkaline earth metal oxide whereby to produce a combustible gas of low sulfur content which leaves the top surface of the bed and entrains fine solids from the bed, the bed being contained in partial combustion equipment whereof the operating conditions include at least one condition which is limiting with respect to reducing the amount of sulfur in the combustible gas; causing the combustible gas to pass through a solids separation device whereby at least some of the entrained fine solids are separated from the combustible gas, and a combustible gas of low sulfur content and reduced solids content is discharged from the separation device; and monitoring the sulfur content of the combustible gas or of gases derived therefrom (e.g. flue gases) to obtain a signal representative of the sulfur content of the combustible gas; characterized by causing a regulated increase in the total amount of solids in the combustible gas passing to the solids separation device in response to an increase in the sulfur content of the combustible gas as indicated by the sulfur-representative signal thereby reducing the amount of sulfur in the combustible gas discharged from the separating device.

2. A method according to claim 1 characterized in that the said regulated increase in the total amount of solids in the combustible gas passing to the solids separation device is regulated by an expedient selected from the following: (a) causing the combustible gas to impinge on a pivoted or hinged member; deriving a signal representative of a deflection of the member, and employing said signal to regulate the amount of solids in the combustible gas; (b) deriving a signal representative of the rate of retention or accumulation of solids by a device for separating solids from the combustible gas, and employing the signal to regulate the amount of solids in the combustible gas; (c) deriving a signal representative of a property of the combustible gas which property is affected by the amount of solids in the combustible gas, and employing the signal to regulate the amount of solids in the combustible gas.

3. A method according to claim 2 characterized in that the combustible gas is passed through a cyclone separator and separated solids are caused to pass to a dipleg forming a solids-outlet conduit from the separator, and wherein the temperature of the dipleg is monitored and a signal representative of the temperature of the dipleg is employed to regulate the amount of solids in the combustible gas.

4. A method according to any one of claims 1 to 3 characterized in that solids separated from the combustible gas by the said solids separation device are returned, at least in part, to the dense phase fluidized bed and/or at least in part to the freeboard dilute phase space above the top surface of the bed in accordance with the requirement for fines in the combustible gas passing to the said solids separation device.

5. A method according to any one of claims 1 to 4 characterized in that the amount of solids in the combustible gas product passing to the solids separation device is varied by varying the amount of elutriatable solids in the bed.

6. A method according to claim 5 characterized in that the amount of elutriatable solids is varied by one of the following: (a) increasing the velocity of gas through the bed; (b) adding elutriatable solids into the bed; (c) attriting particles within the bed; (d) adding to the bed a substance which, at the bed conditions, generates elutriatable solids; (e) a combination of any of the foregoing.

## Revendications

1. Procédé pour convertir un combustible contenant du soufre en un gaz combustible à faible teneur en soufre par les opérations de: combustion partielle du combustible contenant du soufre dans un lit de conversion fluidisé de matières solides en particules à phase dense dont au moins certaines matières solides comprennent un oxyde de métal alcalino-terreux de manière à produire un gaz combustible à faible teneur en soufre qui s'échappe à la surface supérieure du lit et entraîne du lit de fines matières solides le lit étant contenu dans un appareillage de combustion partielle dont les conditions opératoires en comprennent au moins une à effet limitateur du point de vue de la réduction de la quantité de soufre dans le gaz combustible; passage du gaz combustible dans un dispositif de séparation des matières solides dans lequel au moins certaines des fines matières solides entraînées sont séparées du gaz combustible et un gaz combustible à faible teneur en soufre et à teneur réduite en matières solides est déchargé du dispositif de séparation; et contrôle de la teneur en soufre du gaz ou des gaz combustibles qui en dérivent (par exemple des fumées) pour obtenir un signal représentatif de la teneur en soufre du gaz combustible; caractérisé en ce qu'une élévation réglée de la quantité totale de matières solides dans le gaz combustible passant dans le dispositif de séparation des matières solides est engendrée en réponse à une élévation de la teneur en soufre du gaz combustible comme indiqué par le signal représentatif du soufre, de façon à réduire ainsi la quantité de soufre dans le gaz combustible déchargé du dispositif séparateur.

2. Procédé suivant la revendication 1, caractérisé en ce que l'élévation réglée de la quantité totale de matières solides dans le gaz combustible passant dans le dispositif de séparation des matières solides est réglée par une cause déterminante choisie entre des moyens consistant: (a) à faire entrer le gaz combustible en contact avec un organe pivotant ou articulé; à engendrer un signal représentatif d'une déviation de l'organe et à utiliser ce signal pour régler la quantité de matières solides dans le gaz combustible; (b) à engendrer un signal représentatif de la vitesse de rétention ou d'accumulation de matières solides par un dispositif destiné à séparer les matières solides du gaz combustible et à utiliser le signal pour régler la quantité de matières solides dans le gaz combustible; (c) à engendrer un signal représentatif d'une propriété du gaz combustible, propriété qui est affectée par la quantité de matières solides dans le gaz combustible, et à utiliser le signal pour régler la quantité de matières solides dans le gaz combustible.

3. Procédé suivant la revendication 2, caractérisé en ce qu'on fait passer le gaz combustible dans un séparateur à cylone et on fait passer les matières solides séparées dans une branche plongeuse formant un conduit de sortie des matières solides partant du séparateur, et la température de la branche plongeuse est contrôlée et un signal représentatif de la température de la branche plongeuse est utilisé pour régler la quantité de matières solides dans le gaz combustible.

4. Procédé suivant l'une quelconque des revendications 1 à 3, caractérisé en ce que les matières solides séparées du gaz combustible par le dispositif de séparation des matières solides sont renvoyées, au moins en partie, au lit fluidisé à phase dense et/ou au moins en partie dans l'espace dégagé à phase diluée au-dessus de la surface supérieure du lit conformément aux conditions exigées en ce qui concerne les fines contenues dans le gaz combustible envoyé au dispositif de séparation des matières solides.

5. Procédé suivant l'une quelconque des revendications 1 à 4, caractérisé en ce qu'on fait varier la quantité de matières solides dans le produit gazeux combustible envoyé au dispositif de séparation des matières solides en jouant sur la quantité de matières solides pouvant être séparées par élutriation dans le lit.

6. Procédé suivant la revendication 5, caractérisé en ce qu'on fait verier la quantité de matières solides pouvant être séparées par élutriation de l'une des façons suivantes: (a) élévation de la vitesse de passage du gaz à travers le lit; (b) addition au lit de matières solides pouvant être séparées par élutriation; (c) usure par frottement des particules dans le lit;

(d) addition au lit d'une substance qui, dans les conditions du lit, engendre des matières solides pouvant être séparées par élutriation; (e) combinaison en nombre quelconque des possibilités ci-dessus.

**Patentansprüche**

1. Verfahren zur Umwandlung eines schwefelhaltigen Brennstoffs in ein brennbares Gas mit niedrigem Schwefelgehalt, bei dem der schwefelhaltige Brennstoff in einem dichten Umwandlungswirbelbett aus teilchenförmigen Feststoffen, von denen mindestens einige Erdalkalimetalloxid enthalten, zur Erzeugung eines brennbaren Gases mit geringem Schwefelgehalt teilweise verbrannt wird, welches die Oberfläche des Bettes verläßt und feine Feststoffteilchen aus dem Bett mitschleppt, wobei sich das Bett in einer Teilverbrennungsanlage befindet und wobei die Verfahrensbedingungen mindestens eine Verfahrensbedingung umfassen, die bezüglich der Verringerung der Schwefelmenge in dem brennbaren Gas limitierend ist; das brennbare Gas durch eine Feststoffabtrennungsvorrichtung geleitet wird, wobei mindestens ein Teil der mitgerissenen feinen Feststoffteilchen vom brennbaren Gas abgetrennt wird, und ein brennbares Gas mit geringem Schwefelgehalt und verringertem Feststoffgehalt aus der Abtrennvorrichtung austritt; und bei dem der Schwefelgehalt des brennbaren Gases oder daraus erhaltener Gase (z.B. Rauchgase) überwacht wird, um ein für den Schwefelgehalt des brennbaren Gases repräsentatives Signal zu erhalten; dadurch gekennzeichnet, daß eine kontrollierte Zunahme der Gesamtmenge an Feststoffen in dem brennbaren Gas, das durch die Feststoffabtrennvorrichtung geleitet wird, als Folge einer Zunahme des Schwefelgehalts des brennbaren Gases, wie er durch das für den Schwefel repräsentative Signal angezeigt wird, bewirkt wird und dadurch die Menge an Schwefel in dem aus der Abtrennvorrichtung austretenden brennbaren Gas verringert wird.

2. Verfahren nach Anspruch 1, dadurch gekennzeichnet, daß die kontrollierte Zunahme der Gesamtmenge an Feststoffen im brennbaren Gas, das durch die Feststoffabtrennvorrichtung geleitet wird, durch eine der folgenden Maßnahmen geregelt wird:

(a) man läßt das brennbare Gas auf ein schwenkbares oder angelenktes Teil auftreffen; man erzeugt ein Signal entsprechend der Ablenkung des Teils und verwendet dieses Signal zur Regelung der Menge an Feststoffen im brennbaren Gas;

(b) man erzeugt ein Signal ensprechend der Rückhalte- oder Sammelgeschwindigkeit von Feststoffen durch eine Vorrichtung zum Abtrennen von Feststoffen aus dem brennbaren Gas und verwendet das Signal zur Regelung der Menge an Feststoffen in dem brennbaren Gas;

(c) man erzeugt ein Signal, das einer Eigenschaft des brennbaren Gases entspricht, wobei die Eigenschaft durch die Menge an Feststoffen in dem brennbaren Gas beeinflußt wird, une verwendet das Signal zur Regelung der Menge an Feststoffen im brennbaren Gas.

3. Verfahren nach Anspruch 2, dadurch gekennzeichnet, daß das brennbare Gas durch einen Zyklonabscheider geleitet und die abgeschiedenen Feststoffe in eine Senkleitung geführt werden, die eine Feststoffauslaßleitung aus dem Abscheider bildet, wobei Temperatur der Senkleitung überwacht und ein der Temperatur in der Senkleitung entsprechendes Signal verwendet wird, um die Menge der Feststoffe im brennbaren Gas zu regeln.

4. Verfahren nach einem der Ansprüche 1 bis 3, dadurch gekennzeichnet, daß die aus dem brennbaren Gas durch die Feststoffabtrennvorrichtung abgetrennten Feststoffe entsprechend den Anforderungen für Feinstoffe in dem zu der Feststoffabtrennvorrichtung geleiteten brennbaren Gas zumindest teilweise in das dichte Wirbelbett und/oder zumindest teilweise in die verdünnte Phase über der Oberfläche des Bettes zurückgeführt werden.

5. Verfahren nach einem der Ansprüche 1 bis 4, dadurch gekennzeichnet, daß die Menge an Feststoffen in dem brennbaren Produktgas, welches zu der Feststoffabtrennvorrichtung geleitet wird, durch Veränderung der Menge an mitreißbaren Feststoffen im Bett verändert wird.

6. Verfahren nach Anspruch 5, dadurch gekennzeichnet, daß die Menge der mitreißbaren Feststoffe durch eine der folgenden Maßnahmen verändert wird:

(a) Erhöhung der Gasgeschwindigkeit durch das Bett;

(b) Zusetzen von mitreißbaren Feststoffen zum Bett;

(c) Zerreiben der Teilchen im Bett;

(d) Zugabe einer Substanz zum Bett, die unter den Bettbedingungen mitreißbare Feststoffe erzeugt; und

(e) eine Kombination beliebiger der vorstehenden Maßnahmen.